# EUROPEAN PATENT SPECIFICATION

(11) **EP 3 157 814 B1**
(45) Date of publication and mention of the grant of the patent: **09.10.2019**
(21) Application number: 15732522.6
(22) Date of filing: 22.06.2015
(51) Int. Cl.: B64F 1/36

(54) **LOADING OF AIRCRAFT BAGGAGE CONTAINERS**
BELADEN VON FLUGZEUGGEPÄCKBEHÄLTERN
CHARGEMENT DE CONTENEURS DE BAGAGES D'AÉRONEF

(30) Priority: 23.06.2014 DK 201470382
(43) Date of publication of application: 26.04.2017
(73) Proprietor: BEUMER Group A/S, 8200 Århus N (DK)
(72) Inventor: LYKKEGAARD, Uffe, DK-8000 Aarhus C (DK); FRANSEN, Dirk Vivian Hypolyt, NL-6121 RM Born (NL)
(74) Representative: Plougmann Vingtoft a/s
(86) International application number: PCT/DK2015/050176
(87) International publication number: WO 2015/197070

(56) References cited:
- EP-A1- 2 096 054
- EP-A1- 2 138 425
- DE-A1-102009 039 277
- US-A1- 2009 166 474

## Description

### FIELD OF THE INVENTION

The invention relates to automatic packing of aircraft baggage containers using a collection station and a container loading apparatus, and in particular to loading of Unit Load Devices, ULDs, also referred to as ULD containers for later loading into an aircraft, with baggage items or similar cargo items of varying size, shape and consistency.

### BACKGROUND OF THE INVENTION

One task of an airport is the task of baggage handling. From check-in and transfer, bags must be transported to the right place at the right time. Baggage arrive at different moments at different locations and are often buffered before being directed to loading places. Baggage processing areas of an airport have a relatively high percentage of injuries. Ergonomic studies have been conducted in airport baggage handling since the early 1990s. Statistics show that injuries are getting more frequent as the number of passengers and their baggage increases. An important factor for airports is how to improve working conditions and another important key performance indicator in baggage handling is the average cost per handled baggage item.

In order to improve handling of baggage, e.g. when loading baggage or similar cargo items into a container fitted for an aircraft, so-called Unit Load Devices, ULDs, some systems utilize robot solutions for baggage handling and loading of baggage into such containers, one example being German patent application DE 10 2009 039277 (to Siemens AG), which relates to a method for loading ULD containers with flight baggage, relatively large quantities of which can be transported in the ULD container, which forms a transporting unit, in a state in which layering has taken place automatically or manually to form a stack. In order for it to be possible for the flight baggage to be introduced very quickly into the ULD container in an ergonomically advantageous manner, with optimized stacking and no disruption, it is proposed for a number of items of flight baggage to be accumulated outside the ULD container to form one or more volume units, which are introduced as a layer or stack into the ULD container.

In view of the present inventors, the known solutions may be seen to suffer from disadvantages such as not being able to load the baggage into such containers in a manner efficient enough to help decrease the cost per handled item, not being able to load ULDs fast enough and/or being unreliable and/or being too expensive and/or too expensive to maintain.

Thus, it has been appreciated that an improved method for loading a container with flight baggage or similar cargo, which container will later be loaded into an aircraft and an improved system for carrying out the method is of benefit, and in consequence the present invention has been devised.

### SUMMARY OF THE INVENTION

It may be seen as an object of the present invention to provide an improved method for loading a container with flight baggage or similar cargo, which container will later be loaded into an aircraft, and an improved system for carrying out the method. Preferably, the invention alleviates, mitigates or eliminates one or more of the above or other disadvantages singly or in any combination. Further objectives appear from the description, claims and figures.

In particular, it may be seen as an object of the invention to provide a method and system able to load ULDs fast, without being too expensive to implement and/or use and/or maintain.

Accordingly there is, in a method aspect of the invention, provided a method for loading a container with flight baggage or similar cargo, which container will later be loaded into an aircraft, the method comprising
- collecting a plurality of baggage or similar cargo items on a collection and insertion member positioned outside the container,
- inserting the collection and insertion member with the plurality of baggage or similar cargo items into the container in an insertion direction,
wherein the method further comprises
- removing said plurality of baggage or similar cargo items from the collection and insertion member by
- retracting the collection and insertion member with said plurality of baggage or similar cargo items in a retraction direction out of the container, while
- blocking said plurality of baggage or similar cargo items from being retracted along with the collection and insertion member by a blocking member, in order to load the container.

Hereby there is provided an improved method for loading a container with flight baggage or similar cargo, which container will later be loaded into an aircraft. It may be found that part of the invention lies in collecting a plurality of baggage or similar cargo items on a collection and insertion member positioned outside the container. Alternatively or additionally it may be found that part of the invention lies in the described manner of removing the plurality of items from the collection and insertion member.

The described manner of collecting cargo items on the collection and insertion member, and removing the items from said member in the described manner, may also be seen to enable fast and efficient handling and loading of a given amount of baggage or similar cargo items into a container for further transport of the items in the container.

The collection and insertion member preferably has a support surface with a width fitted for introduction through an opening of the container, i.e. a width just below a width of the opening of the container, and fitted with a depth as the container or a little smaller or larger than the depth of the container.

Preferably, the method step of collecting the baggage or similar cargo items on the collection and insertion member, includes handling, i.e. separating the items from each other individually, positioning and/or orienting and/or moving the items for collecting the items one by one on a particular collection and insertion member. The choice of which item to collect on which collection and insertion member is provided by a control system configured to control said collection according to at least one, two or more of: 1) size in X and/or Y and/or Z dimension of the item, 2) remaining space and/or form of remaining space available on a particular collection and insertion member, 3) final destination of the item and 4) orientation of the item just prior to positioning the item on the collection and insertion member. Further criteria for performing the collection step are given herein.

Containers used for transporting several baggage items or similar cargo items by aircraft are known as Unit Load Devices or ULD containers. The method and system disclosed and claimed herein are found particularly useful for such ULD containers. Dependent on size and form of the containers, and size, form and consistency of the baggage or similar cargo items, such containers may be loaded with, e.g. four to eight layers of each 10-16 items, and then additionally about 10-20 items towards/in one or two wedged side/volumes of the container. Thus, and as an indication only, between 50-168 items.

An advantage by collecting the plurality of items outside the container as disclosed herein can also be seen to be that a plurality of items, i.e. densely packed subsets of items for the container are relatively slowly but precisely and efficiently pre-collected to a rather uniform size. The rather uniform size can be a full layer of a collection and insertion member, for later and relatively fast insertion and unloading inside the container.

Another benefit of collecting the plurality of items densely on the collection and insertion member is that hereby the items support each others shape. Further, it may be seen as an advantage for the final filling degree of the container, which degree is preferably as high as possible to decrease cost per handled item and/or space needed in the aircraft, that a current status of the combined shape of the already collected items on a collection and insertion member positioned outside the container is easily detected, for a possible positioning of yet a further item on the collection and insertion member.

In particular, it may be seen that the method and system described herein enable items to be positioned precisely next to each other or even somewhat pushed towards each other upon collection of each item on the collection member, and thus collected very densely. Further, it can alternatively or additionally be seen as an advantage that the manner and way of removing the items from the collection and insertion member as disclosed herein, in particular the use of the blocking member as described, assures a high density of the items to be maintained or even increased upon loading the items into the container.

The blocking member can be a member separate from the container and not normally included in the container. Such blocking member can be provided at or included in a loading apparatus for loading the container. A simple blocking member can be a controllable bar with a width similar to the collection and insertion member.

In accordance with a particular embodiment, collecting the plurality of baggage or similar cargo items on the collection and insertion member positioned outside the container, comprises collecting one or more layers of baggage or similar cargo items on the collection and insertion member, such as a layer of 2, 3, 4, 5, 6, 7, 8, 9, 10, 11 to 20 or more items. An advantage hereby can be seen to be that one or more layers, i.e. particular subsets of densely packed baggage or similar cargo items for the container, which layers or subsets have rather uniform size and preferably substantially rectangular shape, in contrast to individual items which may have rather different forms, consistency and shape, are pre-collected for later insertion and unloading into the container.

In accordance with a particular embodiment at least one piece of baggage or similar cargo is positioned on top of another piece of baggage or similar cargo on the collection and insertion member. Such positioning can e.g. be preferred when a number of relatively thin items, i.e. Z dimension when positioned and/or moved on a conveyor, are to be collected on the same collection and insertion member. Alternatively or additionally, such positioning can be preferred for having items to load into a left and/or right side relative to the opening of the container, i.e. into the volume of the container at one or more wedged sides of the container.

Such one, two, three, four or more items on top of other items on the collection and insertion member may be unloaded firstly inside the container after insertion of the collection and insertion member, e.g. pushed to at least one of a left and/or right side inside the container, prior to extraction of the collection and insertion member for removal of the rest of the items collected on said member. Alternatively, the at least one item on top of one or more items below it, may be removed inside the container, and thus from the collection and insertion member during the process of removing the one or more items below the at least one item.

In a particular embodiment, the plurality of baggage or similar cargo items are removed from the collection and insertion member by at least one insertion and retraction of the collection and insertion member, although only one insertion and extraction for removing the items from the collection and insertion member is seen to be preferred for efficiency. Though, it is foreseen that two, three or more insertions and retractions of a single collection and insertion member can be of benefit.

In an embodiment, a locking gate is used as the blocking member and firstly positioned so as to enable insertion of the collection and insertion member into the container, then secondly positioned so as for the collection and insertion member to be retracted while the locking gate is blocking said plurality of baggage or similar cargo items from being retracted along with the collection and insertion member. In a further embodiment the blocking member is a locking gate of the container. Hereby a particular simple but yet effective method of blocking the items inside the container is provided.

In an embodiment at least one of the plurality of baggage or similar cargo items on the collection and insertion member inserted into the container is moved towards a left or right side of the container, so as to place said at least one item inside the container in the left and/or right side of the container. This may be provided by pushing the at least one item towards the left or right side, when seen from the opening side, relative to an insertion direction of the collection and insertion member, and/or by conveying the at least one item towards the left or right side relative to an insertion direction of the collection and insertion member, and/or by retracting the collection and insertion member towards a directing member or directing means, which directing member or directing means are positioned in a direction so as to direct the at least one item towards the left or right side by retracting the collection and insertion member.

Alternatively or additionally, moving the at least one item towards the left or right is carried out using a pushing element and by positioning at least part of the pushing element so as to direct the at least one item towards a left or right side of the container when retracting the collection and insertion member. Preferably, the movement of the item towards the left or right side of the container, provided by anyone or more of the means and/or manners described, removes the at least one item from the collection and insertion member.

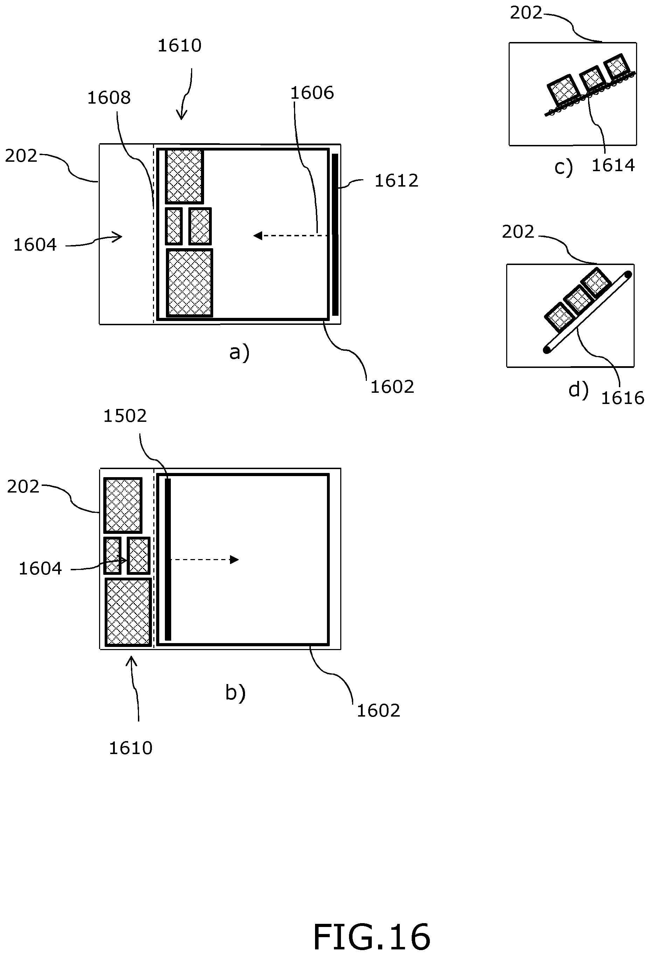

Further and possibly more particularly, and independent of which one or more of the means or manners for moving the items towards the left and/or right is provided, the collection and insertion member, having the size as described herein and inserted through the opening of the container as described herein, is found of particular benefit to be able to fill the rather difficult areas to load at the left and/or right side of the container, i.e. the volumes to the left and/or right of the opening of the container due to left and/or right wedged sides. This may be seen to be due to the collection and insertion member being of a size just matching the size of the opening but enabling insertion through the opening, and of a depth as the container. Thus, the collection and insertion member as described herein provides a support surface inside the container, where items when moved off the support surface to one side of the support surface, will be removed from the support surface at a precise position inside the container, e.g. exactly in the left and/or right volume, and over/in the wedged side(s)/volume(s). This is also elaborated in the description of figure 16.

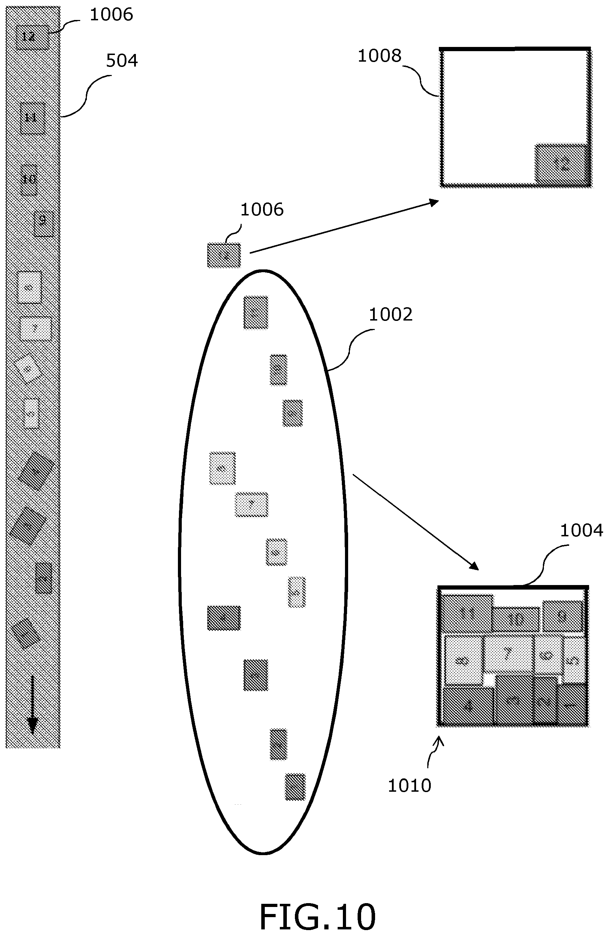

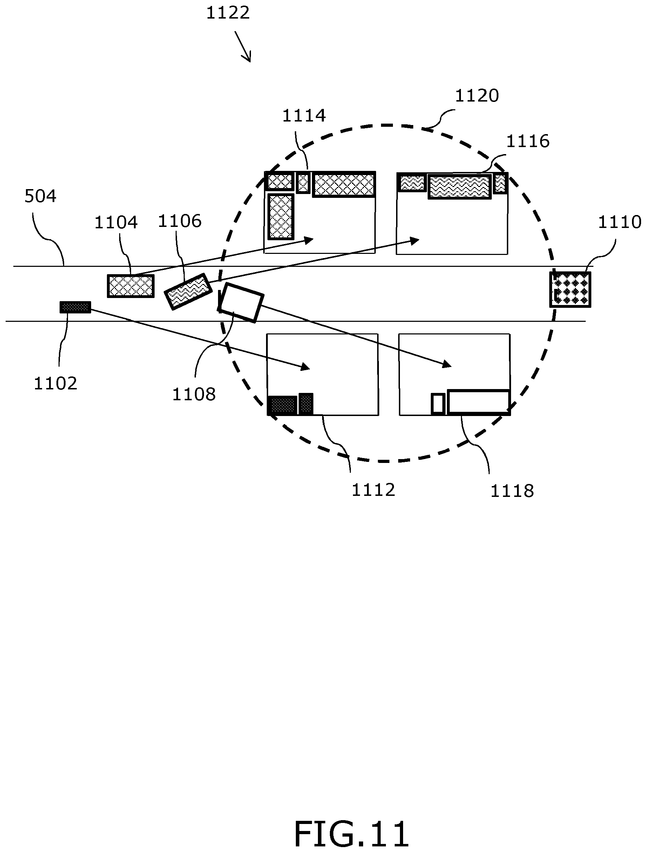

For several reasons disclosed herein, the method preferably comprises using two or more collection and insertion members. It is possible to use only one single insertion member, e.g. on which items are then collected just outside the container for subsequent insertion and retraction and thus loading of items collected on this single collection and insertion member inside the container, and then hereafter collecting another subset of items on the collection and insertion member for loading into the container. Though, it can be found of benefit to provide several, such as 2, 5, 10, 50, 100, 200 or 500 or more collection and insertion members, e.g. in order to prevent the equipment used to densely collect items on a collection and insertion member to wait, while that collection and insertion member is emptied within the container. Other advantages of using several collection and insertion members are disclosed and apparent from the present disclosure, e.g. from the description of figures 10 and 11. Further, and also in relation to the benefit of using a plurality of collection and insertion members, this disclosure, and the system and method described herein, may thus comprise determining a final destination for the baggage or similar cargo items, and pre-collecting and storing or buffering baggage or similar cargo items having the same final destination on one, two, five, ten, 50, 100, 200, 500 or more collection and insertion members, for later retrieval, transport and insertion into one or more containers having said final destination.

According to an apparatus aspect of the invention, which is not claimed, there is provided an airport ground handling baggage system comprising one or more feeding conveyors for feeding baggage or similar cargo items to a collection station being configured to provide a collection of a plurality of baggage or similar cargo items on a collection and insertion member, and a container loading apparatus being configured to carry out the method according to the present disclosure.

In order effectively to densely fit, i.e. position and/or orient the plurality of items on the collection and insertion member, the collection station may include a robot, and collection is provided by the robot positioning and/or orientating the items on the collection and insertion member, so as densely to fit the items in one or more directions of the collection and insertion member, e.g. so as to fit a free place on the collection and insertion member. Alternatively or additionally, the collection station may include a plurality of conveyors and/or pushing devices and collection is provided by the plurality of conveyors and/or pushing devices positioning and/or orientating the items on the collection and insertion member so as densely to fit the items in one or more directions of the collection and insertion member, e.g. so as to fit in a free place on the collection and insertion member. In embodiments of the invention the collection and insertion member includes a supporting surface, such as a plate, being of a size able to be inserted through an opening in the container and being of an approximate surface area of a bottom surface of the container.

By referring to an advantage herein, it must be understood that this advantage may be seen as a possible advantage provided by the invention, but it may also be understood that the invention is particularly, but not exclusively, advantageous for obtaining the described advantage. In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIGS. 1-3 show examples of ULD containers 102, 202 and 302, respectively. Unit Load Device (ULD) containers are used for transporting baggage and/or similar cargo in aircrafts. Various types of ULDs exist of which the ULDs shown in figures 1-3 are examples. The ULD container 102 shown in figure 1 has one wedged side 104.
FIG. 4 shows virtual layers of a ULD container,
FIG. 5 shows a vision system used for determining item characteristics,
FIG. 6 shows item dimensions and orientation,
FIG. 7 shows a robot with a working head,
FIGS. 8 a) - f) show positioning an item on a collection and insertion member 802,
FIG. 9 shows a collection and insertion member,
FIG. 10 shows a conveyor with a plurality of baggage items, which items are collected on two collection members,
FIG. 11 shows a conveyor 504 with a plurality of baggage items. Some other items are collected on four collection members 1112, 1114, 1116 and 1118,
FIG. 12 shows a ULD container provided on lifting equipment with a collection and insertion member 1202, which member is about to be inserted into the container,
FIGS. 13 a) and b) show a collection and insertion member which has been partly inserted and fully inserted into a ULD container, respectively, for loading a first plurality of items at a first level into the container,
FIG. 14 shows a collection and insertion member which is about to be inserted into the ULD container for loading a second plurality of items at a second level of the container and into the container,
FIGS. 15 a) - c) show a method of loading the ULD container with baggage items using a blocking member and the collection and insertion member,
FIGS. 16 a) and b) show a method of loading an area to the left of an opening of the ULD container with baggage items using a pushing element. FIGS. 16 c) or d) show alternative means for directing the items.

### DESCRIPTION OF EMBODIMENTS

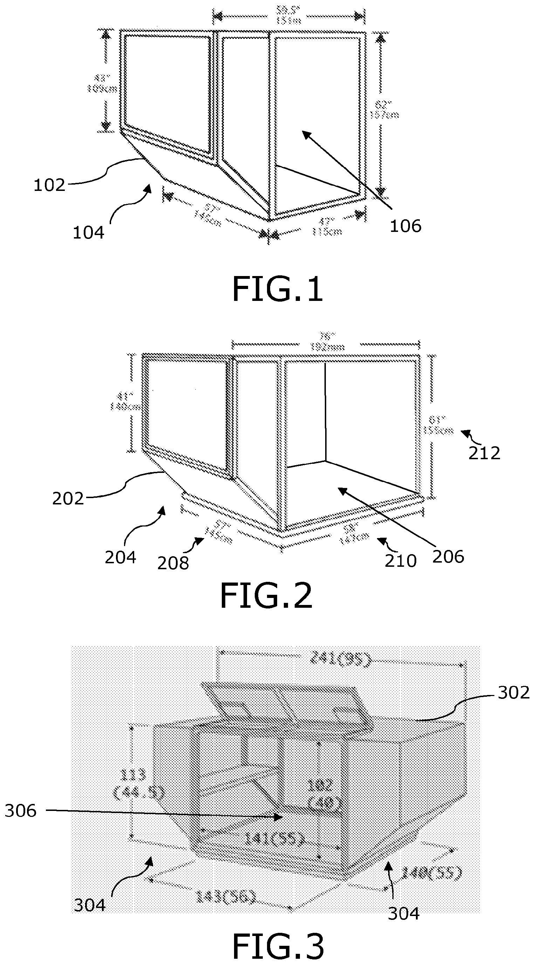

FIGS. 1-3 show perspective views of ULD containers 102, 202 and 302, respectively. Unit Load Device containers are used for transporting baggage and/or similar cargo in aircrafts. The cargo is loaded into the ULD and then the ULD is loaded into the aircraft. Various types of ULDs exist, of which the ULDs shown in figures 1-3 are examples. The ULD container 102 shown in figure 1 has one wedged side or part 104 to the left of the opening 106. In typical ULDs, a volume of the ULD to the left of the opening and above the wedged side is typically only accessible through the opening 106 in the middle of the ULD. The ULD container 202 in FIG. 2 is a somewhat larger ULD than the one illustrated in figure 1, but also has one wedged side 204 to the left of the opening 206. Approximate outer dimensions of the ULDs are shown in the figures, and as example it can be seen that the ULD in figure 2 has a bottom with a depth 208 of 145 cm (57 inches), a width 210 of 147 cm and a height 212 of 155 cm. It also follows that a size of the opening of each ULD is about the same size as the height times the width of the bottom, minus thickness of the frame of the ULD. The overall width of the ULDs is typically about 20-50% wider than the bottom surface due to the form of the shown ULDs, and their one or more wedged sides. The ULD in FIG. 3 has two at least partly wedged sides 304 as shown, and two volumes accessible only through the opening 306, one towards the left side and one towards the right side of the opening as shown. The choice of ULD type is among others depending upon the size of aircraft, and e.g. if the ULD is provided to fill half the width of the aircraft or the full width.

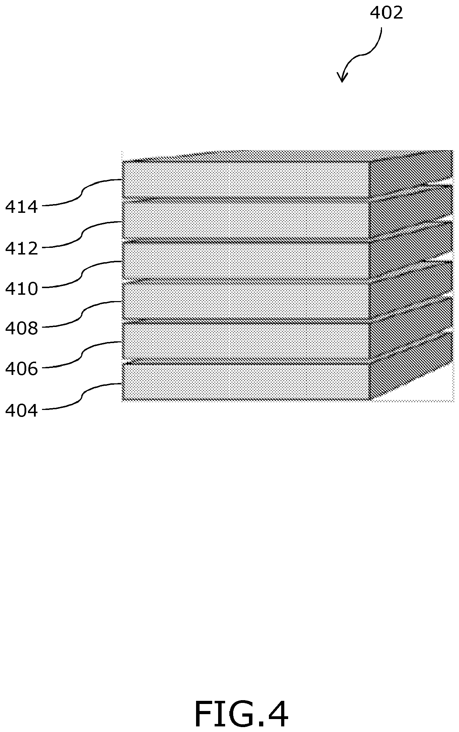

FIG. 4 shows virtual layers 402 of a ULD container, such as the ULD 202 shown in figure 2. The surface area and shape of each layer is preferably the same or substantially the same as a rectangular bottom area of the ULD. The height of each of the layers can be chosen in response to the baggage or similar cargo items available, and/or so as for one or more layers to fit into the height of the ULD or to fit a remaining free height of a ULD, which ULD has already been at least partly filled with baggage. The layer 404 can be referred to as a first or lowermost layer, above which the second, third, fourth, fifth and sixth layers 406, 408, 410, 412, 414 are illustrated.

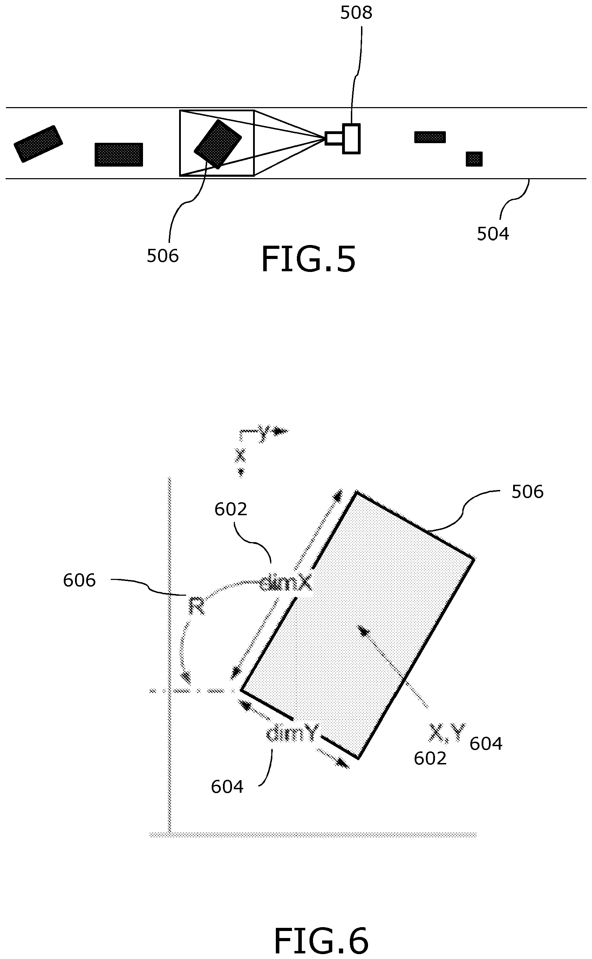

FIG. 5 shows a top view of an imaging system 508 for determining item characteristics, such as size or volume, consistency, shape, structure, surface characteristics, first or second class classified baggage or other item characteristics of the items provided on a feeding conveyor 504. This information is later used by software in a control system which is configured to determine an optimized order and/or position and/or orientation of loading the baggage onto a certain collection and insertion member, as described further herein, to obtain a collection and insertion member packed with items as densely as possible. Various other item characteristics, such as weight may be predetermined or determined by other means, or can be determined or estimated by the imaging system.

FIG. 6 illustrates that the imaging system is used to determine at least an X and Y dimension 602, 604 of the item 506. The X direction is perpendicular to the Y direction. Preferably and possibly also the height, i.e. a Z dimension, of the item is determined. The orientation R 606, e.g. relative to a side guard of the conveyor 504 can be determined. Otherwise one or more of these item characteristics are predetermined, e.g. for the orientation, in that the items are oriented with their largest dimension along a side of a conveyor. With the vision system illustrated and/or another system, also a final destination for the item is determined or predetermined and known for the item 506.

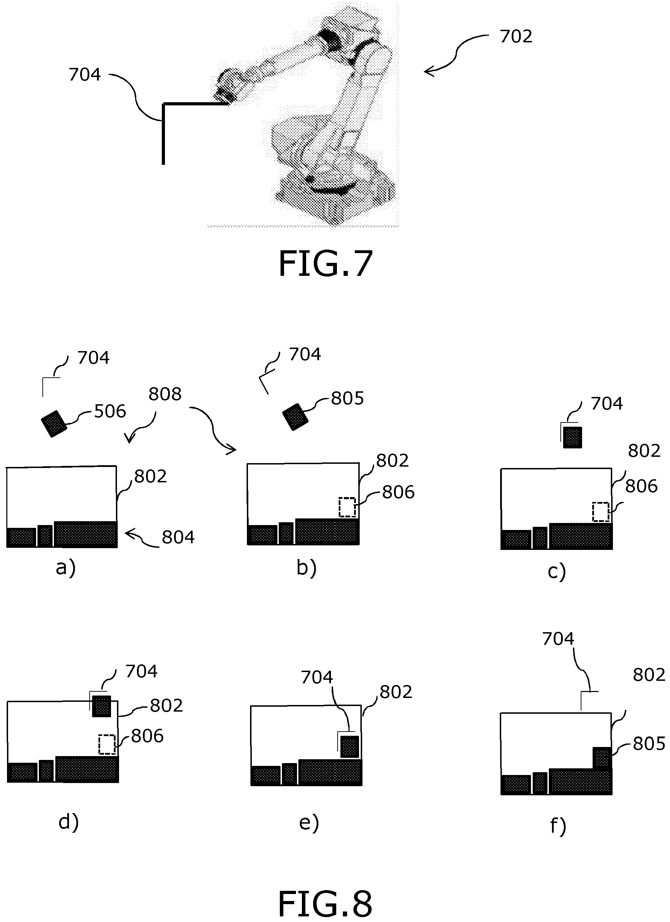

FIG. 7 shows a robot 702, such as a multiple axis robot as shown, with a working head 704, such as a gripper and/or vacuum device and/or a simple arm 704 as illustrated, for positioning and/or orienting the item 506 on a collection and insertion member 802.

In FIG. 8a a plurality of items 804, all having the same final destination, have already been found to have dimensions so as to fit and fill, or substantially fit and fill, a row from a left to a right side of a layer of items on the collection and insertion member 802 when given or having a certain orientation as shown, and hence, these items have already been collected on the collection and insertion member at a collection station 808. In FIG. 8b, a further item 805, having the same final destination as the items already collected, and having certain dimensions and orientation, has been found to fit the free area or place 806 indicated on the collection and insertion member at the collection station 808. Hence, as illustrated in FIGS. 8c - 8f, the item 805 is then positioned and oriented to occupy the free place 806. Preferably, an imaging system continuously verifies the status on the collection and insertion member, thus facilitating re-calculations of the optimal collection sequence and/or positioning and/or orientation of further items to be loaded on said support surface or collection and insertion member.

Other item positioning and/or orienting means than a robot 702, such as conveyors and/or pushing elements, may alternatively or additionally be used to position the items on the collection and insertion member 802. As mentioned, an imaging or vision system (not shown) may also be installed to monitor the current free place(s) - if any - on a given collection and insertion member.

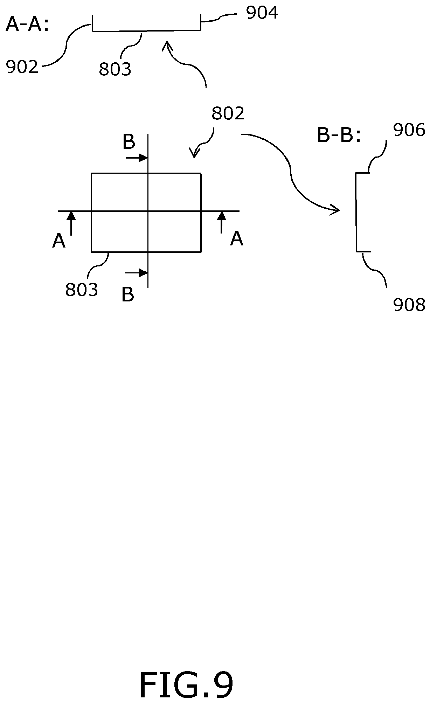

FIG. 9 is a simple illustration of a simple embodiment of the collection and insertion member. In the embodiment, the collection and insertion member 802 is a support surface. In the embodiment, the support surface is a plane or substantially plane plate 803, possibly with left and/or right sides 902, 904, respectively, and possibly with front and rear sides or edges 908 and 906, respectively. The sides of the support surface may be provided so as to guide and support at least a part of a height of a first layer sideways, or a first plurality of items to be positioned and/or transported and/or buffered and/or stored on the collection and insertion member.

One or more of these sides are possibly and preferably lowerable so as to enable items to slide off the plate 803, e.g. when or if the items are pushed. Alternatively, the collection and insertion member may comprise, or be, one or more conveying elements. Such conveying elements may be included in the support surface. These conveying elements may be liftable and lowerable, so as to be able to slightly lift the items prior to conveying the items off the support surface. Alternatively or additionally, the support surface of the collection and insertion member may include wheels or balls able to be braked, or multiple way rollers and/or liftable or non-liftable wheels, balls or multiple way rollers. The mentioned means, such as just the plate, have the overall function to provide a support area for a plurality of items, which items will stay on the support area on the collection and insertion member, in a period from collection of the items and until the collection and insertion member with the items has been inserted into a ULD, and until the items are to be removed from the member inside the ULD container. This period may include some transport and/or storing of the collection and insertion member.

The sideways support may alternatively just be provided by an upwards protrusion along the edge of the collection and insertion member of e.g. a few millimetres height, so as to prevent items on the collection and insertion member unintentionally to slide off.

The size and shape of the collection and insertion member is provided so as for the collection and insertion member to be insertable through the opening of the ULD container it is fitted for. Thus, preferably, and according to embodiments herein, the collection and insertion member is substantially rectangular and has a sideways width from left to right just smaller than a width of the opening of the ULD container, and a depth from its front to its rear about the depth of the ULD container it is fitted for.

As an alternative to having lowerable sides as described above, sideways enclosures being separable from the collection and insertion members can be foreseen to support the plurality of items sideways on the collection and insertion member. These enclosures may as an example be associated with, such as detachably attached to, the collection and insertion member prior to collecting the items on the collection and insertion member. The enclosure may be a structure giving the collection and insertion member at least 3 sides with a height arranged to prevent the items from falling off the collection and insertion member towards these at least 3 sides. Such enclosure may also or alternatively enable providing a more dense collection of items on the collection and insertion member. One side of the collection and insertion member may still be open, e.g. so as to provide easier collection of items on the collection and insertion member using this open side.

The sideways enclosure can be detached from the collection and insertion member just prior to insertion of the collection and insertion member into the container or just after full insertion of said member, but prior to removing the items from the collection and insertion member.

A sideways enclosure, can alternatively be attached to the collection and insertion member at a loading apparatus, or be a part associated with or comprised in a loading apparatus arranged for loading the collection and insertion member into the container. The loading apparatus is then preferably positioned so that a means of a collection station for collecting the items on the collection and insertion member is within operable reach. Further, a combined station, possibly using one or more of the described sideways enclosures, for collecting the items and insertion of the items into the container can be foreseen.

FIG. 10 shows a conveyor 504 with a plurality of baggage items numbered 1-12, where the items 1-11, shown inside the shape with the reference number 1002, have been found to have the same final destination, and have also been found to fit and be able to fill, or substantially fill or complete, a layer 1010 of the collection and insertion member 1004, when oriented as shown. This layer 1010 can then later fill one or more of the virtual layers 404-414 shown in figure 4 in the ULD container.

Preferably, only a single layer of items are collected on each collection and insertion member, e.g. for simplicity, but it may be provided that, e.g. two relatively thin items - e.g. only having half the Z dimension as most of the other items - but possibly otherwise two rather similar dimensioned items, are fitted on top of each other filling a place in a layer of other items. The other items in the layer may have a double thickness in the Z dimension. Likewise, it may be foreseen that two, three or even more layers are provided on one collection and insertion member, or that one or more items are positioned on top of another layer.

Though, having one or more layers, but possibly preferably single layers on each collection and insertion member, which layers have a rather uniform height from collection member to collection member, as well as preferably within the collection member for that matter, may be seen to be preferred. The rather uniform height of these one or more layers can be such as a height in an interval of 200-400 mm, or such as always above 150 or 200 mm, but below 250, 300, 350, 400, 450, 500, 550, 600, 650, 700, 750, 800, 850 or 900 mm. Alternatively or additionally, there may be foreseen two or more of these predetermined height classes, e.g. in response to ULD and/or baggage type available. Such one or more predetermined height classes may be seen to increase an ability to completely fill a ULD with pre-collected items on a plurality of collection and insertion members. Thus, from a plurality of primarily, and possibly only, layers fitted in 2D collected outside the ULD container, a 3D volume in the ULD container can be loaded with items.

For the layers described and disclosed herein, it may be seen to be preferred that the layers have the same form as the bottom surface of the ULD and extend an area equal to or substantially equal to, such as 95% or more, of the bottom area of the ULD.

The 12^{th} item with the reference number 1006 is positioned on a second collection and insertion member 1008. Likewise, when more items arrive along the conveyor 504 for the same final destination as the 12^{th} item, these items can be collected on the collection and insertion member 1008.

FIG. 11 shows a feeding conveyor 504 with a plurality of baggage items. Some other items are collected on four collection members 1112, 1114, 1116 and 1118. The items on each of the separate collection and insertion members 1112, 1114, 1116 and 1118 have four different final destinations. This is illustrated by the items having four different appearances. Hence, the item with solid black fill 1102, is positioned on the collection and insertion member 1112, as shown, and so forth for the other items 1104, 1106, 1108 which are positioned on separate collection and insertion members 1114, 1116, 1118, respectively. Alternatively or additionally, a number of collection members can be present for the same final destination of the ULD in which the items on them are to be loaded in. Then, an election between two or more collection and insertion members can be provided for a single or a plurality of items, e.g. in response to on which of the two or more collection and insertion members said single or plurality of items fits the best.

Possibly, at least one particular collection and insertion member for first class baggage can be provided. This at least one collection and insertion member can then, e.g., be loaded into a particular first class ULD, or as a topmost, more or less complete, layer of any ULD. The item 1110 having passed the shown collection and insertion members 1112, 1114, 1116 and 1118, may e.g. be an item for another not shown collection and insertion member, and/or for another final destination and/or an item, such as a rejected item, for processing elsewhere.

Consequently, and at least for the reasons explained for figures 10 and 11, using two or more collection and insertion members is found of benefit. In addition or alternatively to improving handling of the items on a lower level, as explained for figures 10 and 11, by using multiple collection and insertion members, it is of a lower level benefit to be able to insert one or more pre-prepared and at least partly filled collection and insertion members in one or more ULD containers, while filling one or more other collection and insertion members.

From another level of perspective, which may be seen as a higher level, the method and system disclosed herein enables a relatively high number of baggage items to be loaded into ULDs within a relatively short period, e.g. as compared with systems where single items are handled when loaded into a ULD container. With the present disclosure it is foreseen and enabled to retrieve and transport, in a "pull" manner, a relatively large amount of baggage, which has possibly already been pre-collected on a plurality of collection and insertion members as disclosed herein, and load this relatively large amount of baggage into ULDs with the method and system as disclosed herein, e.g. within a relatively short period of time, e.g. just prior to departure of an aircraft.

In the collection station 1122 shown in figure 11, it is foreseen to use positioning and/or orientation equipment, such as pusher elements and/or conveyors, and/or one or more robots, having a working range so as to be able to move the items from the conveyor 504, with or without orienting them, to one of the collection and insertion members 1112, 1114, 1116, 1118. The dashed circle 1120 illustrates an example of such working range. Although foreseen, equipment for transporting empty and filled collection and insertion members to and from the collection station etc., is for simplicity not illustrated.

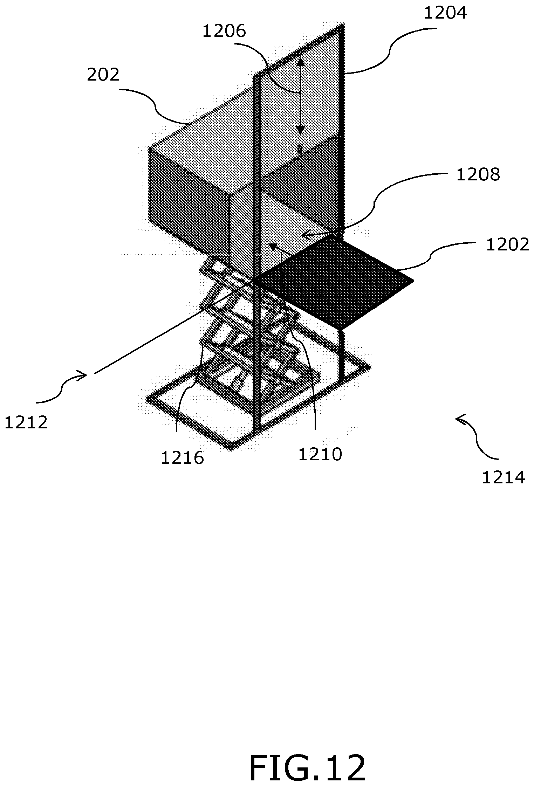

FIG. 12 is a perspective view, which illustrates at least the function of a container loading apparatus 1214 and shows a ULD container 202 provided on lifting equipment 1216. There is also shown a collection and insertion member 1202, which member is positioned in front of the opening at the container and is about to be inserted into the container 202 at a first level 1212 of the container, just above the bottom 1208 of the ULD container.

For simplicity, no plurality of complete layers of baggage or similar cargo items, are shown on the collection and support member 1202. Further, and although foreseen, no equipment such as one or more conveyors for transporting the collection member to and from the container loading apparatus is shown. Further, and although also foreseen, no equipment is shown for positioning, holding and inserting the collection and insertion member with the plurality of baggage or similar cargo items into the container in the insertion direction 1210, and for retracting the collection and insertion member out of the container. Equipment for positioning the blocking member 1204 along the up/down direction 1206 is for simplicity also not illustrated, but foreseen. In the illustration the insertion direction is substantially horizontal but may, at least for a number of layers such as the first, second, third and fourth layers, be slightly tilted so as to be non-horizontal and ease or even at least partly provide the removal of one or more items from the collection and insertion member. The tilt may be sideways if one or more items are to be removed sideways. Alternatively or additionally, the tilt may also include an angle measured parallel with the depth of the container, e.g. when items are to be removed from the collection and insertion member in the middle main part of the container. The angle may be chosen such as in the interval of 5-25 degrees. For the last one or more layers to be inserted, there may not be enough space left in the container to provide a slightly tilted insertion and collection member.

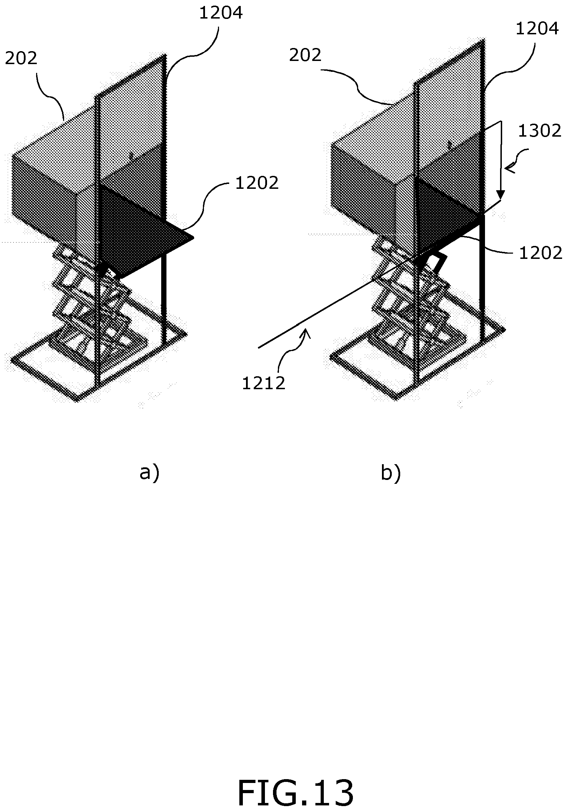

In FIG. 13 a) the collection and insertion member 1202 has been partly inserted into the ULD container by the container loading apparatus, and in FIG. 13b) the collection and insertion member 1202 has been fully inserted into the ULD and the blocking member 1204 can be lowered in the locking direction 1302, so as to be positioned just above the first level 1212 near the bottom of the container, and so as to block any items on the collection member inside the ULD while the collection and insertion member is retracted.

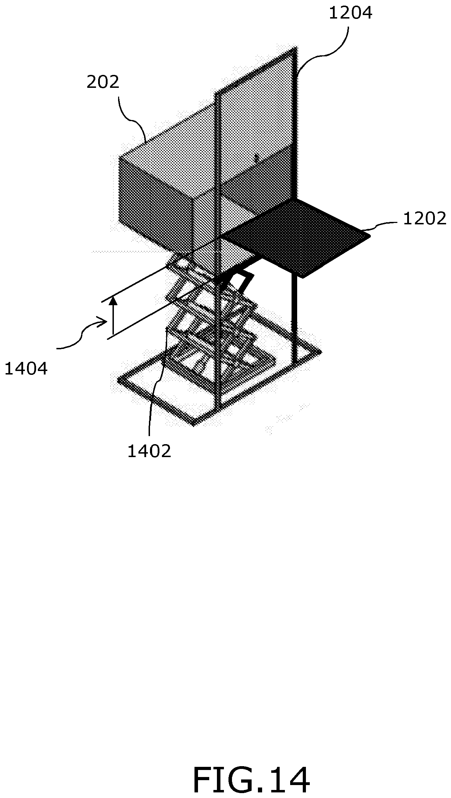

FIG. 14 shows a collection and insertion member which is about to be inserted into the ULD container, for loading a second plurality of items into the container at a second level 1404 of the container. In the illustration the ULD container is provided on a lift 1402, but alternatively or additionally, the equipment for insertion and retraction of the collection member (not shown) can be moveable in the up/down direction. The second level 1404 is possibly determined by a control system operably connected to a vision system or the like for determining the highest level of the previously inserted and loaded items, and so as for the second level to be just above this level or point.

When a number of layers of items have been loaded into the ULD by insertion of a number of collection and insertion members and retraction thereof, while blocking the items with the blocking member upon retracting the collection and insertion member, the loaded ULD container is then transported to its aircraft or to a short or long term ULD storage.

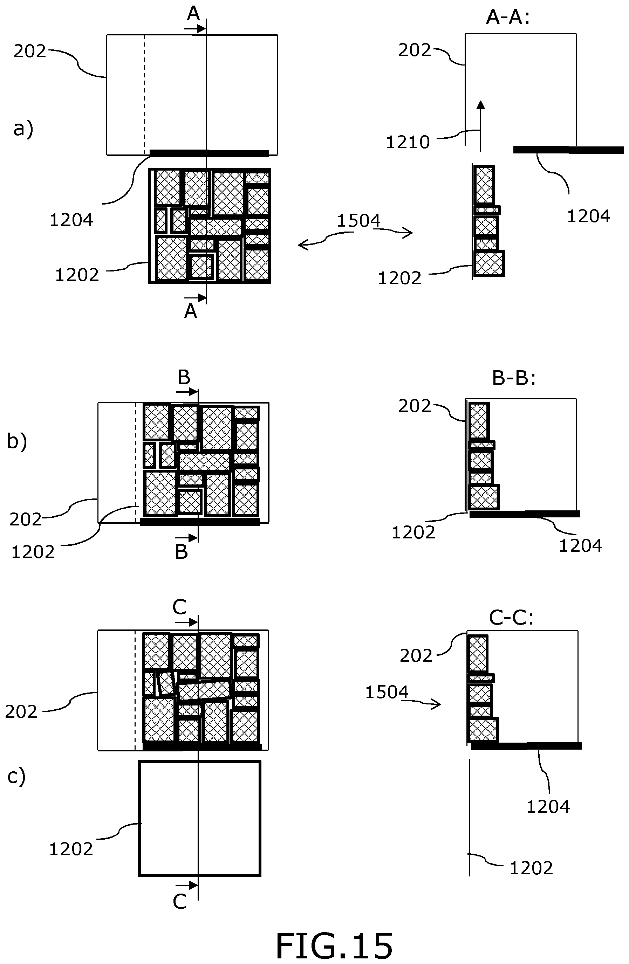

FIGS. 15 a) - c) show a method of loading the ULD container 202 with baggage items using the blocking member 1204 and the collection and insertion member 1202. The views to the left in each figure are top views, whereas the views to the right are cross-sectional views along the lines A-A, B-B and C-C as indicated in the top views.

In FIG. 15 a) a full layer of baggage or similar cargo items 1504 is positioned outside the container 202, and the blocking member 1204 is positioned at a level above the highest item on the collection and insertion member, so as to enable the collection and insertion member with the items 1504 to be inserted into the ULD in an insertion direction 1210 through the opening of the ULD. In FIG. 15 b) the collection and insertion member has been inserted into the ULD, and the blocking member 1204 has been lowered to a position just above the surface of the collection and insertion member, so as to enable blocking the items with the blocking member 1204 inside the ULD upon retraction of the collection and insertion member. In FIG. 15 c) the collection and insertion member has been retracted out of the ULD and the layer of products has been removed or unloaded from the collection and insertion member, and thus has been loaded into the ULD container.

In other words, figures 15 a) - c) illustrate that a locking gate is used as the blocking member 1204, and firstly positioned so as to enable insertion of the collection and insertion member into the container, then secondly positioned so as for the collection and insertion member to be retracted while blocking said plurality of baggage or similar cargo items from being retracted along with the collection and insertion member. In a particular simple but yet effective embodiment the locking gate is a locking gate of the container.

FIGS. 16 a) and b) show a method of loading an area or volume 1604 to the left of an opening of the ULD container with baggage items 1610, using the pushing element 1612 and a movement of the pushing element in the pushing direction 1606. The ULD 202 is seen in a top view. The dashed line 1608 indicates where the wedged side of the ULD meets the bottom of the ULD. It follows from the figure that the insertion member when inserted has a left edge or side just above and along this dashed line. Thus any item removed from the collection and insertion member by crossing over this left side, will be precisely loaded into the difficultly accessible volume in the left side of the container in or over the wedged left side.

Additionally or alternatively, items may be moved to the left and/or right on the collection and insertion member, by conveying the at least one item towards the left or right side relative to an insertion direction of the collection and insertion member. This may be provided using one or more conveying elements comprised in the collection and insertion member. Alternatively or additionally, moving at least one item towards the left or right side of the collection and insertion member, preferably inside the ULD and preferably so as to remove the at least one item from said member, can be provided by retracting the collection and insertion member towards a directing member (not shown), which directing member is positioned in a direction so as to direct the at least one item towards the left or right side upon retracting the collection and insertion member.

The directing member may be the pushing element 1612, shown in the figure, but e.g. positioned more or less crosswise relative to the depth of the ULD and positionable inside the ULD, and hereby used to be positioned so that at least part of the pushing element directs the at least one item towards a left or right side of the container upon retracting the collection and insertion member. The directing member may alternatively or additionally be or include an upright positioned driven or non-driven conveyor element. This conveyor element can then be positioned parallel with or more or less crosswise relative to the depth of the container. At least one end of such conveyor element may be moveable, at least in the pushing direction 1606. Such upright positioned conveyor element is illustrated as a crosswise, upright positioned roller conveyor 1614 in top view in FIG. 16 c) and illustrated as a crosswise, upright positioned belt conveyor 1616 in the top view in FIG. 16 d). In the figures 16 a) to 16 d) the directing means 1612, 1614 and 1616 are already positioned inside the ULD, but it is understood that they may, or may not, be inserted into the ULD before inserting the collection and insertion member. Thus, these directing means can e.g. be inserted just after inserting a collection and insertion member with a number of items to be directed and loaded into a volume to one side of the container.

In operation, a collection and insertion member with a full layer of items can firstly be collected as shown in figure 10 at a collection station. Then this layer can be transported on its collection and insertion member to a loading apparatus and unloaded inside the ULD as shown in figures 12, 13 and 15. Hereafter the area or volume towards one or more wedged sides of the ULD can be loaded with one or more items as shown and described in figures 16 a) and b). Then a full layer can be inserted, followed by 1, 2, 3, 4, 5, 6 or more items to be positioned towards the left and/or right side, which process is then continued until the ULD container is full. Alternatively, two full layers are loaded into the container firstly, and then some items are loaded into the volume to one side of these layers using the means and method as described, e.g. in figure 16.

In figure 16 the insertion member 1602 is shown having the same size as the ones for a complete layer, but this collection and insertion member 1602 may be one of several available sizes and/or constructions dedicated the purpose of filling the area or volume towards the left and/or right sides of the ULD. In particular, such member may be somewhat smaller than the ones used for a complete layer.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A method for loading a container with flight baggage or similar cargo, which container (102, 202, 302) will later be loaded into an aircraft, the method comprising
- collecting a plurality of baggage or similar cargo items on a collection and insertion member (802, 1112, 1114, 1116, 1118, 1202, 1602) positioned outside the container,
- inserting the collection and insertion member with the plurality of baggage or similar cargo items (506, 1002, 1006, 1102, 1104, 1106, 1108, 1504, 1610) into the container in an insertion direction (1210),
wherein the method further comprises
- removing said plurality of baggage or similar cargo items from the collection and insertion member (802, 1112, 1114, 1116, 1118, 1202, 1602) in order to load the container, the removing being **characterized by**
- retracting the collection and insertion member with said plurality of baggage or similar cargo items (506, 1002, 1006, 1102, 1104, 1106, 1108, 1504, 1610) in a retraction direction out of the container, while
- blocking said plurality of baggage or similar cargo items from being retracted along with the collection and insertion member by a blocking member (1204).

2. The method according to claim 1, wherein collecting the plurality of baggage or similar cargo items on the collection and insertion member positioned outside the container comprises collecting one or more layers of baggage or similar cargo items (1010) on the collection and insertion member before inserting the collection and insertion member with the one or more layers (1010) of baggage or similar cargo items into the container.

3. The method according to claim 1 or 2, wherein collecting the plurality of baggage or similar cargo items on the collection and insertion member positioned outside the container comprises that at least two pieces of baggage or similar cargo is positioned on top of each other.

4. The method according to any of the preceding claims 2 or 3, wherein the plurality of baggage or similar cargo items are removed from the collection and insertion member by at least one insertion and retraction of the collection and insertion member (802, 1112, 1114, 1116, 1118, 1202, 1602).

5. The method according to any of the preceding claims, wherein a locking gate (1204) is used as the blocking member and firstly positioned so as to enable insertion of the collection and insertion member into the container, then secondly positioned so as for the collection and insertion member to be retracted while blocking said plurality of baggage or similar cargo items from being retracted along with the collection and insertion member.

6. The method according to claim 5, wherein the locking gate is a locking gate integrated in the container (102, 202, 302).

7. The method according to any of the preceding claims, further comprising moving at least one of the plurality of baggage or similar cargo items (1610) on the collection and insertion member (802, 1112, 1114, 1116, 1118, 1202, 1602) inserted into the container towards a left or right side of the container, so as to place said at least one item inside the container in the left or right side of the container.

8. The method according to claim 7, wherein moving the at least one item towards a left or right side of the container is provided by pushing the at least one item towards the left or right side relative to the insertion direction (1210) of the collection and insertion member.

9. The method according to claim 7, wherein moving the at least one item towards a left or right side of the container is provided by conveying the at least one item towards the left or right side relative to the insertion direction (1210) of the collection and insertion member.

10. The method according to claim 7, wherein moving the at least one item towards the left or right side of the container, is provided by retracting the collection and insertion member towards a directing member, which directing member is positioned in a direction so as to direct the at least one item towards the left or right side upon retracting the collection and insertion member (802, 1112, 1114, 1116, 1118, 1202, 1602).

11. The method according to claim 10, wherein moving the at least one item towards the left or right side of the container is carried out using a pushing element and by positioning at least part of the pushing element so as to direct the at least one item towards a left or right side of the container by retracting the collection and insertion member (802, 1112, 1114, 1116, 1118, 1202, 1602).

12. The method according to claim 7-11, wherein moving the at least one item towards the left or right side of the container removes the at least one item from the collection and insertion member (802, 1112, 1114, 1116, 1118, 1202, 1602).

13. The method according to any of the preceding claims, wherein the method comprises using two or more collection and insertion members (802, 1112, 1114, 1116, 1118, 1202, 1602).

14. The method according to any of the preceding claims, wherein the method further comprises determining a final destination for the baggage or similar cargo items (506, 1002, 1006, 1102, 1104, 1106, 1108, 1504, 1610), and pre-collecting and storing or buffering baggage or similar cargo items (1002) having the same final destination on one, two or more collection and insertion members (1004) for later retrieval, transport and insertion into one or more containers (102, 202, 302) having said final destination.

## Patentansprüche

1. Verfahren zum Beladen eines Containers mit Fluggepäck oder ähnlicher Fracht, wobei der Container (102, 202, 302) später in ein Flugzeug geladen wird, wobei das Verfahren Folgendes umfasst:
- Sammeln einer Vielzahl von Gepäck- oder ähnlichen Frachtstücken auf einem Sammel- und Einführelement (802, 1112, 1114, 1116, 1118, 1202, 1602), das außerhalb des Containers positioniert ist,
- Einführen des Sammel- und Einführelements mit der Vielzahl von Gepäck- oder ähnlichen Frachtstücken (506, 1002, 1006, 1102, 1104, 1106, 1108, 1504, 1610) in einer Einführrichtung (1210) in den Container,
wobei das Verfahren ferner Folgendes umfasst:
- Entfernen der Vielzahl von Gepäck- oder ähnlichen Frachtstücken von dem Sammel- und Einführelement (802, 1112, 1114, 1116, 1118, 1202, 1602), um den Container zu beladen, wobei das Entfernen **gekennzeichnet ist durch**
- Zurückziehen des Sammel- und Einführelements mit der Vielzahl von Gepäck- oder ähnlichen Frachtstücken (506, 1002, 1006, 1102, 1104, 1106, 1108, 1504, 1610) in einer Rückzugsrichtung aus dem Container, während
- **durch** ein Blockierelement (1204) verhindert wird, dass die Vielzahl von Gepäck- oder ähnlichen Frachtstücken zusammen mit dem Sammel- und Einführelement zurückgezogen wird.

2. Verfahren nach Anspruch 1, wobei das Sammeln der Vielzahl von Gepäck- oder ähnlichen Frachtstücken auf dem Sammel- und Einführelement, das außerhalb des Containers positioniert ist, Sammeln von einer oder mehreren Schichten von Gepäck- oder ähnlichen Frachtstücken (1010) auf dem Sammel- und Einführelement vor dem Einführen des Sammel- und Einführelements mit der einen oder den mehreren Schichten (1010) von Gepäck- oder ähnlichen Frachtstücken in den Container umfasst.

3. Verfahren nach Anspruch 1 oder 2, wobei das Sammeln der Vielzahl von Gepäck- oder ähnlichen Frachtstücken auf dem Sammel- und Einführelement, das außerhalb des Containers positioniert ist, umfasst, dass mindestens zwei Teile von Gepäck oder ähnlicher Fracht übereinander positioniert werden.

4. Verfahren nach einem der vorhergehenden Ansprüche 2 oder 3, wobei die Vielzahl von Gepäck- oder ähnlichen Frachtstücken durch mindestens ein Einführen und Zurückziehen des Sammel- und Einführelements von dem Sammel- und Einführelement (802, 1112, 1114, 1116, 1118, 1202, 1602) entfernt wird.

5. Verfahren nach einem der vorhergehenden Ansprüche, wobei ein Verriegelungstor (1204) als das Blockierelement verwendet wird und zuerst derart positioniert wird, dass es das Einführen des Sammel- und Einführelements in den Container ermöglicht, und dann derart positioniert wird, dass das Sammel- und Einführelement zurückgezogen wird, während verhindert wird, dass die Vielzahl von Gepäck- oder ähnlichen Frachtstücken zusammen mit dem Sammel- und Einführelement zurückgezogen wird.

6. Verfahren nach Anspruch 5, wobei das Verriegelungstor ein Verriegelungstor ist, das in den Container (102, 202, 302) integriert ist.

7. Verfahren nach einem der vorhergehenden Ansprüche, ferner umfassend Bewegen von mindestens einem der Vielzahl von Gepäck- oder ähnlichen Frachtstücken (1610) auf dem Sammel- und Einführelement (802, 1112, 1114, 1116, 1118, 1202, 1602), das in den Container eingeführt wurde, zu einer linken oder rechten Seite des Containers, um das mindestens eine Stück innerhalb des Containers auf der linken oder rechten Seite des Containers zu platzieren.

8. Verfahren nach Anspruch 7, wobei das Bewegen des mindestens einen Stücks zu einer linken oder rechten Seite des Containers durch Drücken des mindestens einen Stücks zur linken oder rechten Seite relativ zur Einführrichtung (1210) des Sammel- und Einführelements bereitgestellt wird.

9. Verfahren nach Anspruch 7, wobei das Bewegen des mindestens einen Stücks zu einer linken oder rechten Seite des Containers durch Befördern des mindestens einen Stücks zur linken oder rechten Seite relativ zur Einführrichtung (1210) des Sammel- und Einführelements bereitgestellt wird.

10. Verfahren nach Anspruch 7, wobei das Bewegen des mindestens einen Stücks zur linken oder rechten Seite des Containers durch Zurückziehen des Sammel- und Einführelements zu einem Leitelement bereitgestellt wird, wobei das Leitelement in einer Richtung positioniert ist, um das mindestens eine Stück beim Zurückziehen des Sammel- und Einführelements (802, 1112, 1114, 1116, 1118, 1202, 1602) zur linken oder rechten Seite zu leiten.

11. Verfahren nach Anspruch 10, wobei das Bewegen des mindestens einen Stücks zur linken oder rechten Seite des Containers unter Verwendung eines Schiebeelements und durch Positionieren von mindestens einem Teil des Schiebeelements durchgeführt wird, um das mindestens eine Stück zu einer linken oder rechten Seite des Containers durch Zurückziehen des Sammel- und Einführelements (802, 1112, 1114, 1116, 1118, 1202, 1602) zu leiten.

12. Verfahren nach einem der Ansprüche 7-11, wobei das Bewegen des mindestens einen Stücks zur linken oder rechten Seite des Containers das mindestens eine Stück von dem Sammel- und Einführelement (802, 1112, 1114, 1116, 1118, 1202, 1602) entfernt.

13. Verfahren nach einem der vorhergehenden Ansprüche, wobei das Verfahren Verwenden von zwei oder mehr Sammel- und Einführelementen (802, 1112, 1114, 1116, 1118, 1202, 1602) umfasst.

14. Verfahren nach einem der vorhergehenden Ansprüche, wobei das Verfahren ferner Bestimmen eines Endziels für die Gepäck- oder ähnlichen Frachtstücke (506, 1002, 1006, 1102, 1104, 1106, 1108, 1504, 1610) und im Voraus Sammeln und Aufbewahren oder Zwischenlagern von Gepäck- oder ähnlichen Frachtstücken (1002), die das gleiche Endziel aufweisen, auf einem, zwei oder mehr Sammel- und Einführelementen (1004) zum späteren Zugriff, Transport und Einführen in einen oder mehrere Container (102, 202, 302), die das Endziel aufweisen, umfasst.

## Revendications

1. Procédé pour le chargement d'un conteneur avec des bagages de vol ou du fret similaire, ledit conteneur (102, 202, 302) étant chargé ultérieurement dans un aéronef, le procédé comprenant
- la collecte d'une pluralité de bagages ou d'articles de fret similaires sur un élément de collecte et d'insertion (802, 1112, 1114, 1116, 1118, 1202, 1602) positionné à l'extérieur du conteneur,
- l'insertion de l'élément de collecte et d'insertion avec la pluralité de bagages ou d'articles de fret similaires (506, 1002, 1006, 1102, 1104, 1106, 1108, 1504, 1610) dans le conteneur selon une direction d'insertion (1210),
et ledit procédé comprenant en outre
- le retrait de ladite pluralité de bagages ou d'articles de fret similaires de l'élément de collecte et d'insertion (802, 1112, 1114, 1116, 1118, 1202, 1602) afin de charger le conteneur, le retrait étant **caractérisé par**
- la rétractation de l'élément de collecte et d'insertion avec ladite pluralité de bagages ou d'articles de fret similaires (506, 1002, 1006, 1102, 1104, 1106, 1108, 1504, 1610) selon une direction de rétraction hors du conteneur, tout en
- empêchant, à l'aide d'un élément de blocage (1204), que la pluralité de bagages ou d'articles de fret similaires ne soient rétractés avec l'élément de collecte et d'insertion.

2. Procédé selon la revendication 1, ladite collecte de la pluralité de bagages ou d'articles de fret similaires sur l'élément de collecte et d'insertion positionné à l'extérieur du conteneur comprenant la collecte d'une ou plusieurs couches de bagages ou d'articles de fret similaires (1010) sur l'élément de collecte et d'insertion avant l'insertion de l'élément de collecte et d'insertion avec la ou les couches (1010) de bagages ou d'articles de fret similaires dans le conteneur.

3. Procédé selon la revendication 1 ou 2, ladite collecte de la pluralité de bagages ou d'articles de fret similaires sur l'élément de collecte et d'insertion positionné à l'extérieur du conteneur comprenant qu'au moins deux pièces de bagages ou de fret similaires sont positionnés l'une sur l'autre.

4. Procédé selon l'une quelconque des revendications précédentes 2 ou 3, ladite pluralité de bagages ou d'articles de fret similaires étant retirés de l'élément de collecte et d'insertion par au moins une insertion et une rétractation de l'élément de collecte et d'insertion (802, 1112, 1114, 1116, 1118, 1202, 1602).

5. Procédé selon l'une quelconque des revendications précédentes, une porte de verrouillage (1204) étant utilisée en tant qu'élément de blocage et étant d'abord positionnée de façon à permettre l'insertion de l'élément de collecte et d'insertion dans le conteneur, puis étant ensuite positionnée de façon à permettre à l'élément de collecte et d'insertion d'être rétracté tout en empêchant que ladite pluralité de bagages ou d'articles de fret similaires ne soient rétractés avec l'élément de collecte et d'insertion.

6. Procédé selon la revendication 5, ladite porte de verrouillage étant une porte de verrouillage intégrée dans le conteneur (102, 202, 302).

7. Procédé selon l'une quelconque des revendications précédentes, comprenant en outre le déplacement d'au moins l'un de la pluralité de bagages ou d'articles de fret similaires (1610) sur l'élément de collecte et d'insertion
(802, 1112, 1114, 1116, 1118, 1202, 1602) inséré dans le conteneur vers le côté gauche ou droit du conteneur, de façon à placer ledit au moins un article à l'intérieur du conteneur dans le côté gauche ou le droit du conteneur.

8. Procédé selon la revendication 7, ledit déplacement du au moins un article vers un côté gauche ou droit du conteneur étant obtenu en poussant ledit au moins un article vers le côté gauche ou droit par rapport à la direction d'insertion (1210) de l'élément de collecte et d'insertion.

9. Procédé selon la revendication 7, ledit déplacement du au moins un article vers un côté gauche ou droit du conteneur étant obtenu en convoyant le au moins un article vers le côté gauche ou droit par rapport à la direction d'insertion (1210) de l'élément de collecte d'insertion.

10. Procédé selon la revendication 7, ledit déplacement du au moins un article vers le côté gauche ou droit du conteneur étant obtenu en rétractant l'élément de collecte et d'insertion vers un élément de direction, ledit élément de direction étant positionné dans une direction de façon à diriger le au moins un article vers le côté gauche ou droit lors de la rétractation de l'élément de collecte et d'insertion (802, 1112, 1114, 1116, 1118, 1202, 1602).

11. Procédé selon la revendication 10, ledit déplacement du au moins un article vers le côté gauche ou droit du conteneur étant effectué à l'aide d'un élément de poussée et en positionnant au moins une partie de l'élément de poussée de façon à diriger le au moins un article vers un côté gauche ou droit du conteneur en rétractant l'élément de collecte et d'insertion (802, 1112, 1114, 1116, 1118, 1202, 1602).

12. Procédé selon la revendication 7 à 11, ledit déplacement du au moins un article vers le côté gauche ou droit du conteneur retirant le au moins un article de l'élément de collecte et d'insertion (802, 1112, 1114, 1116, 1118, 1202, 1602).

13. Procédé selon l'une quelconque des revendications précédentes, ledit procédé comprenant l'utilisation de deux éléments de collecte et d'insertion (802, 1112, 1114, 1116, 1118, 1202, 1602), ou plus.

14. Procédé selon l'une quelconque des revendications précédentes, ledit procédé comprenant en outre la détermination d'une destination finale pour les bagages ou les articles de fret similaires
(506, 1002, 1006, 1102, 1104, 1106, 1108, 1504, 1610) et la pré-collecte et le stockage ou la mise en attente des bagages ou des articles de fret similaires (1002) possédant la même destination finale sur un, deux, ou plus, éléments de collecte et d'insertion (1004) pour une récupération, un transport et une insertion ultérieurs dans un ou plusieurs conteneurs (102, 202, 302) possédant ladite destination finale.
